# EUROPEAN PATENT APPLICATION

(11) **EP 4 806 789 A1**
(43) Date of publication of application: **16.09.2026**
(21) Application number: 26165214.3
(22) Date of filing: 16.03.2026
(51) Int. Cl.: B64D 27/40

(54) **MOUNTING ARRANGEMENTS FOR OPEN ROTOR PROPULSION SYSTEM**

(30) Priority: 14.03.2025 US 202519079899
(71) Applicant: RTX Corporation, Farmington, CT 06032 (US)
(72) Inventor: MORTON, Jeffrey T., Manchester, 06040 (US); YAZICI, Murat, Glastonbury, 06033 (US); MERCIER, Claude, Vernon, 06066 (US)
(74) Representative: Dehns

(57) **Abstract**

An assembly is provided for an aircraft. This assembly includes an aircraft propulsion system (20) and a propulsion system pylon (108). The aircraft propulsion system (20) includes a turbine engine (32) and an open propulsor rotor (34). The turbine engine (32) is configured to drive rotation of the open propulsor rotor (34). The propulsion system pylon (108) is configured to mount the aircraft propulsion system (20) to an airframe (106) of the aircraft. The propulsion system pylon (108) includes an engine pylon structure (114) and an airframe pylon structure (112). The engine pylon structure (114) is configured to connect the aircraft propulsion system (20) to the airframe pylon structure (112). The engine pylon structure (114) is attached to the turbine engine (32) by a plurality of engine-pylon mounts (140, 152). The airframe pylon structure (112) is configured to connect the engine pylon structure (114) to the airframe (106) of the aircraft. The airframe pylon structure (112) is removably attached to the engine pylon structure (114).

## Description

### BACKGROUND OF THE INVENTION

### 1. Technical Field

This invention relates generally to an aircraft and, more particularly, to mounting a propulsion system.

### 2. Background Information

Various aircraft propulsion systems as well as various propulsion system mounting arrangements are known in the art, including open rotor propulsion systems and mounting arrangements for such open rotor propulsion systems. While these known aircraft propulsion systems and mounting arrangements have various benefits, there is still room in the art for improvement.

### SUMMARY OF THE DISCLOSURE

According to an aspect of the present invention, an assembly is provided for an aircraft. This assembly includes an aircraft propulsion system and a propulsion system pylon. The aircraft propulsion system includes a turbine engine and an open propulsor rotor. The turbine engine is configured to drive rotation of the open propulsor rotor. The propulsion system pylon is configured to mount the aircraft propulsion system to an airframe of the aircraft. The propulsion system pylon includes an engine pylon structure and an airframe pylon structure. The engine pylon structure is configured to connect the aircraft propulsion system to the airframe pylon structure. The engine pylon structure is attached to the turbine engine by a plurality of engine-pylon mounts. The airframe pylon structure is configured to connect the engine pylon structure to the airframe of the aircraft. The airframe pylon structure is removably attached to the engine pylon structure.

According to another aspect of the present invention, another assembly is provided for an aircraft. This assembly includes an aircraft propulsion system and a propulsion system pylon. The aircraft propulsion system includes a turbine engine and an open propulsor rotor. The turbine engine is configured to drive rotation of the open propulsor rotor. The propulsion system pylon includes an engine pylon structure and an airframe pylon structure removably attached to the engine pylon structure. The engine pylon structure is configured to connect the aircraft propulsion system to the airframe pylon structure. The engine pylon structure is configured as or otherwise includes a truss that extends axially along and circumferentially about the turbine engine. The airframe pylon structure is configured to connect the engine pylon structure to an airframe of the aircraft.

According to still another aspect of the present invention, another assembly is provided for an aircraft. This assembly includes an aircraft propulsion system and a propulsion system pylon. The aircraft propulsion system includes a turbine engine, an open propulsor rotor and an open guide vane structure next to the open propulsor rotor. The turbine engine is configured to drive rotation of the open propulsor rotor. The open guide vane structure includes a plurality of open guide vanes arranged circumferentially about an axis. The propulsion system pylon includes a truss and is configured to mount the aircraft propulsion system to an airframe of the aircraft. The truss axially overlaps the open guide vane structure such that an axial distal end of the truss is located axially between the open propulsor rotor and the open guide vane structure.

The following optional features may be applied to any of the above aspects.

The engine-pylon mounts may include a first engine-pylon mount and a second engine-pylon mount. The first engine-pylon mount and the second engine-pylon mount may be axially aligned along and circumferentially offset about an axis of the turbine engine.

The engine-pylon mounts may include a forward engine-pylon mount and an aft engine-pylon mount.

The engine-pylon mounts may include a first engine-pylon mount and a second engine-pylon mount. The first engine-pylon mount and the second engine-pylon mount may be axially offset along an axis of the turbine engine.

The engine-pylon mounts may include an engine-pylon mount configured to transfer a radial load between the turbine engine and the engine pylon structure.

The engine-pylon mounts may include an engine-pylon mount configured to transfer an axial load between the turbine engine and the engine pylon structure.

The engine-pylon mounts may include an engine-pylon mount configured to transfer a torsional load between the turbine engine and the engine pylon structure.

The turbine engine may include a compressor section. The engine-pylon mounts may include an engine-pylon mount located axially between the compressor section and the open propulsor rotor along an axis of the turbine engine.

The turbine engine may include a turbine section. The engine-pylon mounts may include an engine-pylon mount disposed axially along the turbine section.

The engine-pylon mounts may include an engine-pylon mount. The turbine engine may include a turbine section located axially between the open propulsor rotor and the engine-pylon mount along an axis of the turbine engine.

The aircraft propulsion system may also include an open guide vane structure next to the open propulsor rotor. The engine pylon structure may axially overlap the open guide vane structure along an axis of the turbine engine.

The aircraft propulsion system may also include an open guide vane structure next to the open propulsor rotor. The engine-pylon mounts may include an engine-pylon mount located axially between the open propulsor rotor and the open guide vane structure along an axis of the turbine engine.

The open guide vane structure may include a first open guide vane and a second open guide vane circumferentially neighboring the first open guide vane. The engine-pylon mount may be circumferentially aligned with an inter-vane gap, circumferentially between the first open guide vane and the second open guide vane, about an axis of the turbine engine.

The engine pylon structure may include a linkage. The engine-pylon mounts may include an engine-pylon mount disposed at an end of the linkage where the engine-pylon mount mounts the linkage to the turbine engine.

The engine pylon structure may include a frame that extends circumferentially about the turbine engine. The engine-pylon mounts may include an engine-pylon mount that mounts the frame to the turbine engine.

The frame may be a channeled frame that extends partially circumferentially about the turbine engine.

The frame may be an annular frame and extends circumferentially around the turbine engine.

The engine pylon structure may be configured as or otherwise include a truss. In addition or alternatively, the airframe pylon structure may be configured as or otherwise include a truss.

The turbine engine may include a turbine section. An interface between the engine pylon structure and the airframe pylon structure may be located axially along the turbine section.

The turbine engine may include an axis and a turbine section located axially between the open propulsor rotor and an interface between the engine pylon structure and the airframe pylon structure.

An interface between the engine pylon structure and the airframe pylon structure may include: an axial fastener attaching the engine pylon structure and the airframe pylon structure, the axial fastener extending axially along an axis of the turbine engine; a radial fastener attaching the engine pylon structure and the airframe pylon structure, the radial fastener extending radially relative to the axis of the turbine engine; and/or a lateral fastener attaching the engine pylon structure and the airframe pylon structure, the lateral fastener extending laterally relative to the axis of the turbine engine.

The present invention may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic illustration of a propulsion system for an aircraft.
FIG. 2 is a schematic illustration of a forward portion of the propulsion system.
FIG. 3 is a schematic illustration of the propulsion system mounted to an airframe of the aircraft by a pylon.
FIG. 4 is a schematic illustration of a portion of the assembly of FIG. 3 with an engine pylon structure separated from an airframe pylon structure.
FIG. 5 is a schematic illustration of a portion of the assembly of FIG. 3 at the engine pylon structure.
FIG. 6 is a schematic illustration of a portion of the assembly of FIG. 3 with another engine pylon structure arrangement.
FIG. 7 is a schematic cross-sectional illustration of the assembly of FIG. 5 taken along section 7-7 in FIG. 5 at an aft frame.
FIG. 8 is a schematic cross-sectional illustration of the assembly of FIG. 5 with another aft frame arrangement
FIG. 9 is a schematic cross-sectional illustration of the assembly of FIG. 5 taken along section 9-9 in FIG. 5 at a forward frame.
FIG. 10 is a partial schematic cross-sectional illustration of the assembly of FIG. 5 taken along section 10-10 in FIG. 5.
FIG. 11 is a schematic cross-sectional illustration of the pylon at an intersection between the engine pylon structure and the airframe pylon structure, for example taken proximate section 7-7 in FIG. 5.
FIGS. 12A-C are partial schematic illustrations of various coupling attaching mounting elements together.
FIGS. 13A and 13B are partial schematic illustrations of other couplings attaching mounting elements together.
FIGS. 14A and 14B are partial illustrations of various mounting truss members coupling the propulsion system to the aft frame.
FIG. 15 is a schematic sectional illustration of a portion of the assembly of FIG. 5 at an engine-pylon mount.

### DETAILED DESCRIPTION

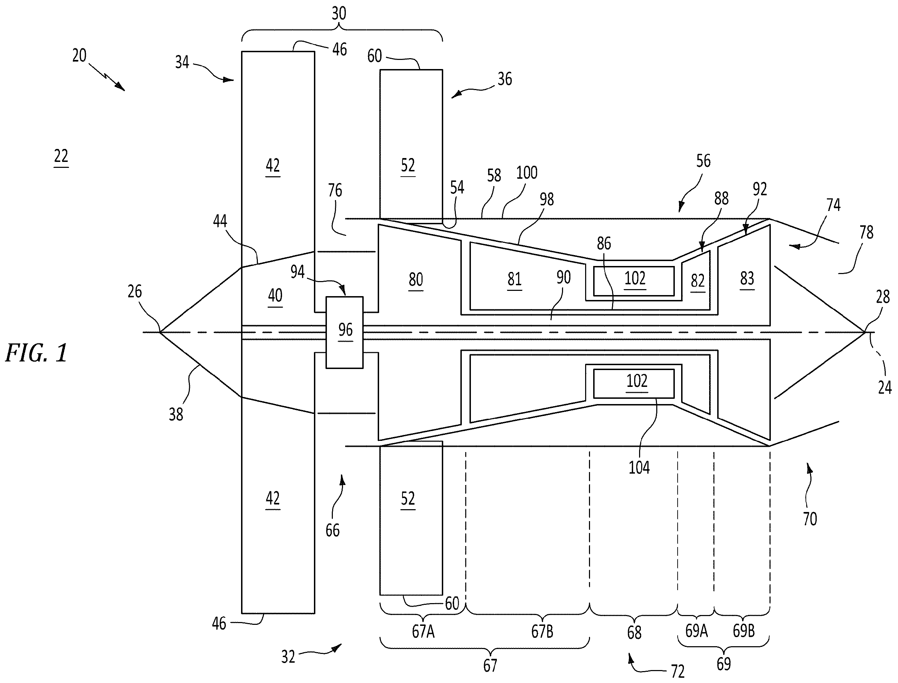

FIG. 1 is a schematic illustration of a propulsion system 20 for an aircraft. The aircraft may be an airplane, a drone (e.g., an unmanned aerial vehicle (UAV)), or any other manned or unmanned aerial vehicle or system. The aircraft propulsion system 20 may be configured as an open rotor propulsion system with a single open rotor and swirl recovery vane (SRV) architecture. Herein, the term "open" may describe a propulsion system section and/or a propulsion system component which is open to an environment 22 (e.g., an ambient environment) external to the aircraft propulsion system 20 and, more generally, the aircraft.

The aircraft propulsion system 20 extends axially along a propulsion system axis 24 between an upstream, forward end 26 of the aircraft propulsion system 20 and a downstream, aft end 28 of the aircraft propulsion system 20. The propulsion system axis 24 may be a centerline axis of the aircraft propulsion system 20. The propulsion system axis 24 may also or alternatively be a centerline axis of one or more members of the aircraft propulsion system 20. The propulsion system axis 24 may also or alternatively be a rotational axis of one or more members of the aircraft propulsion system 20. The aircraft propulsion system 20 of FIG. 1 includes an open rotor propulsion section 30 (e.g., an open rotor propulsion module) and a gas turbine engine 32.

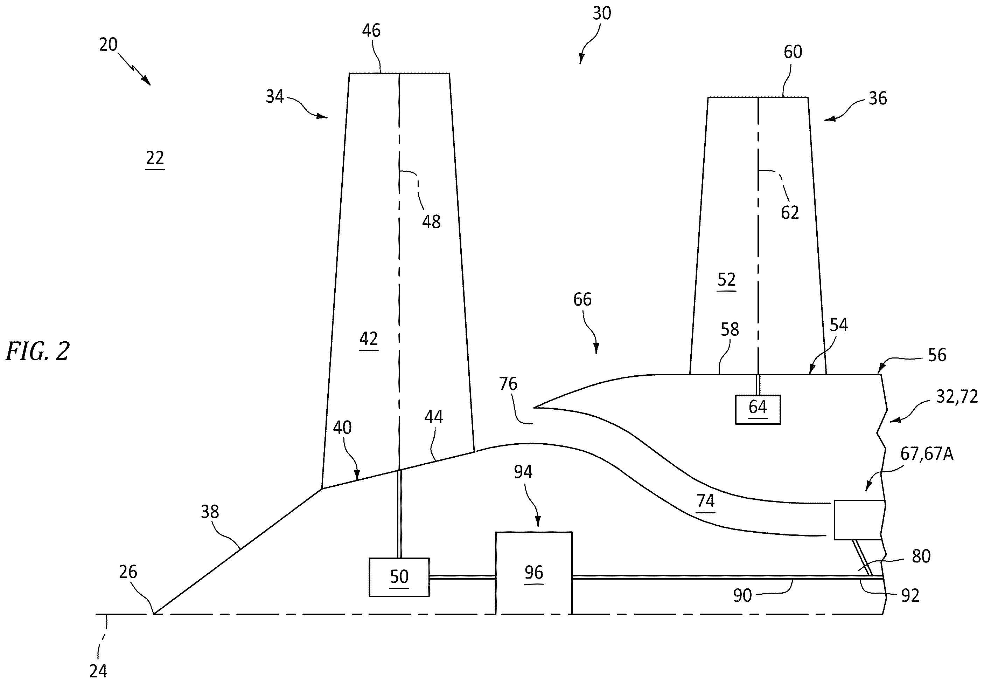

Referring to FIG. 2, the propulsion section 30 includes an open propulsor rotor 34 and an open guide vane structure 36. These propulsion section members 34 and 36 are un-ducted components of the aircraft propulsion system 20 and its propulsion section 30. The propulsion section 30 of FIG. 2 also includes a nose cone 38 disposed at (e.g., on, adjacent or proximate) the propulsion system forward end 26. Briefly, this nose cone 38 may be configured as a spinner which is rotatable with the propulsor rotor 34 about the propulsion system axis 24. Alternatively, the nose cone 38 may be configured as a stationary structure of the propulsion section 30.

The propulsor rotor 34 includes a rotor base 40 (e.g., a disk or a hub) and a plurality of open propulsor blades 42 (e.g., airfoils). The propulsor blades 42 are arranged and may be equispaced circumferentially about the rotor base 40 and the propulsion system axis 24 in an array; e.g., a circular array. This array of the propulsor blades 42 may be unshrouded or alternatively shrouded by a tubular propulsor rotor shroud dedicated to the propulsor rotor 34 for example. Each of the propulsor blades 42 is connected to (e.g., formed integral with or otherwise attached to) the rotor base 40. Each of the propulsor blades 42 projects spanwise along a linear or non-linear span line of the respective propulsor blade 42 (e.g., radially relative to the propulsion system axis 24) out from an exterior surface 44 of the rotor base 40, into the external environment 22, to a distal tip 46 of the respective propulsor blade 42. Here, the exterior surface 44 radially borders the external environment 22 and forms an inner platform surface of the propulsor rotor 34. Each propulsor blade 42 is thereby configured as an un-ducted propulsor blade which is exposed to (e.g., disposed in) the surrounding external environment 22.

Each propulsor blade 42 may be configured to pivot about a respective blade pivot axis 48. This blade pivot axis 48 extends generally radially relative to the propulsion system axis 24. Each propulsor blade 42 of FIG. 2 is operatively coupled with a blade actuation system 50. This blade actuation system 50 is configured to pivot each propulsor blade 42 about its respective blade pivot axis 48. By pivoting each propulsor blade 42 about its blade pivot axis 48, a pitch of the respective propulsor blade 42 may be changed. Of course, it is contemplated some or all of the propulsor blades 42 may be alternatively moved to change the propulsor blade pitch and/or another propulsor blade parameter such as blade camber. Moreover, it is contemplated some or all of the propulsor blades 42 may alternatively be fixed position propulsor blades in other embodiments.

The guide vane structure 36 of FIG. 2 includes a plurality of open exit guide vanes 52 (e.g., airfoils) that are arranged and may be equispaced circumferentially about the propulsion system axis 24 in an array; e.g., a circular array. This array of the guide vanes 52 may be unshrouded or alternatively shrouded by a tubular guide vane shroud dedicated to the guide vane structure 36 for example. The guide vane structure 36 and its guide vanes 52 are arranged axially next to (e.g., adjacent) the propulsor rotor 34 and its propulsor blades 42. The guide vane structure 36 and its guide vanes 52 of FIG. 2, for example, are arranged downstream of the propulsor rotor 34 and its propulsor blades 42, without (e.g., any) other elements axially therebetween to obstruct, turn and/or otherwise influence the air propelled by the propulsor rotor 34 to the guide vane structure 36 for example. Each of the guide vanes 52 of FIG. 2 is coupled to a support structure 54 of a stationary housing structure 56 for the aircraft propulsion system 20. This support structure 54 may be configured as or otherwise include a support frame, a case and/or another fixed structure of the housing structure 56. Each of the guide vanes 52 projects spanwise along a linear or non-linear span line of the respective guide vane 52 (e.g., radially relative to the propulsion system axis 24) out from an exterior surface 58 of the housing structure 56, into the external environment 22, to a distal tip 60 of the respective guide vane 52. Here, the exterior surface 58 radially borders the external environment 22 and forms an exterior aerodynamic flow surface of the aircraft propulsion system 20. Each guide vane 52 is thereby configured as an un-ducted guide vane which is exposed to (e.g., disposed in) the surrounding external environment 22.

Each guide vane 52 may be configured to pivot about a respective vane pivot axis 62. This vane pivot axis 62 extends generally radially relative to the propulsion system axis 24. Each guide vane 52 of FIG. 2 is operatively coupled with a vane actuation system 64. This vane actuation system 64 may be discrete from or integrated as part of the blade actuation system 50. The vane actuation system 64 is configured to pivot each guide vane 52 about its respective vane pivot axis 62. By pivoting each guide vane 52 about its vane pivot axis 62, a pitch of the respective guide vane 52 may be changed. Of course, it is contemplated some or all of the guide vanes 52 may be alternatively moved to change the guide vane pitch and/or another guide vane parameter such as vane camber. Moreover, it is contemplated some or all of the guide vanes 52 may alternatively be fixed position guide vanes in other embodiments.

Referring to FIG. 1, the aircraft propulsion system 20 and its turbine engine 32 include an inlet section 66, a compressor section 67, a combustor section 68, a turbine section 69 and an exhaust section 70. The compressor section 67 of FIG. 1 includes a low pressure compressor (LPC) section 67A and a high pressure compressor (HPC) section 67B. The turbine section 69 of FIG. 1 includes a high pressure turbine (HPT) section 69A and a low pressure turbine (LPT) section 69B. At least (or only) the LPC section 67A, the HPC section 67B, the combustor section 68, the HPT section 69A and the LPT section 69B collectively form a core 72 (e.g., a gas generator) of the turbine engine 32. The aircraft propulsion system 20 and its turbine engine 32 also include an engine flowpath 74; e.g., an annular core flowpath. This engine flowpath 74 extends longitudinally through the engine core 72 from an airflow inlet 76 into the engine flowpath 74 to a combustion products exhaust 78 from the engine flowpath 74. The flowpath inlet 76 of FIG. 1 is also an airflow inlet into the aircraft propulsion system 20 and its turbine engine 32. The flowpath exhaust 78 of FIG. 1 is also a combustion products exhaust from the aircraft propulsion system 20 and its turbine engine 32.

The LPC section 67A includes a bladed low pressure compressor (LPC) rotor 80. The HPC section 67B includes a bladed high pressure compressor (HPC) rotor 81. The HPT section 69A includes a bladed high pressure turbine (HPT) rotor 82. The LPT section 69B includes a bladed low pressure turbine (LPT) rotor 83. Each of these engine rotors 80-83 includes a rotor base (e.g., a disk or a hub) and a plurality of rotor blades (e.g., airfoils, vanes, etc.). The rotor blades are arranged and may be equispaced circumferentially around the respective rotor base in an array. The rotor blades may also be arranged into one or more stages longitudinally along the engine flowpath 74. Each of the rotor blades is connected to the respective rotor base. Each of the rotor blades projects radially (e.g., spanwise) out from the respective rotor base into the engine flowpath 74 and to a distal tip of the respective rotor blade.

The HPC rotor 81 is coupled to and rotatable with the HPT rotor 82. The HPC rotor 81 of FIG. 1, for example, is connected to the HPT rotor 82 by a high speed shaft 86. At least (or only) the HPC rotor 81, the HPT rotor 82 and the high speed shaft 86 collectively form a high speed rotating structure 88; e.g., a high speed spool of the turbine engine 32 and its engine core 72. This high speed rotating structure 88 of FIG. 1 and its members 81, 82 and 86 are rotatable about the propulsion system axis 24. However, in other embodiments, the high speed rotating structure 88 may alternatively be rotatable about another rotational axis which is (e.g., laterally and/or angularly) offset from the rotational axis of the propulsor rotor 34.

The LPC rotor 80 is coupled to and rotatable with the LPT rotor 83. The LPC rotor 80 of FIG. 1, for example, is connected to the LPT rotor 83 by a low speed shaft 90. At least (or only) the LPC rotor 80, the LPT rotor 83 and the low speed shaft 90 collectively form a low speed rotating structure 92; e.g., a low speed spool of the turbine engine 32 and its engine core 72. This low speed rotating structure 92 of FIG. 1 and its members 80, 83 and 90 are rotatable about the propulsion system axis 24. However, in other embodiments, the low speed rotating structure 92 may alternatively be rotatable about another rotational axis which is (e.g., laterally and/or angularly) offset from the rotational axis of the propulsor rotor 34.

The low speed rotating structure 92 is coupled to the propulsor rotor 34 through a drivetrain 94. This drivetrain 94 may be configured as a geared drivetrain, where a geartrain 96 (e.g., a transmission, a speed change device, an epicyclic geartrain, etc.) is disposed between and operatively couples the propulsor rotor 34 to the low speed rotating structure 92 and its LPT rotor 83. With this arrangement, the propulsor rotor 34 may rotate at a different (e.g., slower) rotational speed than the low speed rotating structure 92 and its LPT rotor 83. Here, the propulsor rotor 34 and the low speed rotating structure 92 may rotate in a common (the same) direction about the propulsion system axis 24 or in opposite directions about the propulsion system axis 24 depending, for example, upon the specific configuration of the geartrain 96. Alternatively, the drivetrain 94 may be configured as a direct-drive drivetrain, where the geartrain 96 is omitted. With such an arrangement, the propulsor rotor 34 rotates at a common (the same) rotational speed as the low speed rotating structure 92 and its LPT rotor 83.

The inlet section 66, the LPC section 67A, the HPC section 67B, the combustor section 68, the HPT section 69A, the LPT section 69B and the exhaust section 70 may be arranged sequentially along the propulsion system axis 24. These engine sections 66-70 are housed within and/or formed by the housing structure 56. This housing structure 56 includes an engine case 98 (e.g., a gas generator case) and a propulsion system nacelle 100. The engine case 98 houses one or more of the LPC section 67A, the HPC section 67B, the combustor section 68, the HPT section 69A and the LPT section 69B; e.g., the engine core 72. The engine case 98 of FIG. 1, for example, extends axially along (e.g., axially overlaps) and extends circumferentially about (e.g., circumscribes) the engine sections 67A-69B and the respective engine rotors 80-83. The engine case 98 may also house at least a portion of the drivetrain 94 and its geartrain 96. The propulsion system nacelle 100 houses and provides an aerodynamic cover over the engine case 98. An exterior wall of the propulsion system nacelle 100 of FIG. 1, for example, is disposed radially outboard of, extends axially along (e.g., axially overlaps) and extends circumferentially about (e.g., circumscribes) the engine core 72 and its engine case 98. This nacelle wall may at least partially or completely form the exterior surface 58. With the foregoing arrangement, the engine rotors 80-83 are disposed within the housing structure 56. By contrast, the propulsor rotor 34 and the guide vane structure 36 are disposed at least partially (or completely) outside of the housing structure 56 within the external environment 22.

During operation of the aircraft propulsion system 20 of FIG. 1, ambient air within the external environment 22 is propelled by the rotating propulsor rotor 34 in the downstream, aft direction towards the propulsion system aft end 28. A major portion (e.g., more than 50%) of this air bypasses the turbine engine 32 to provide forward thrust while a minor portion (e.g., less than 50%) of the air flows into the aircraft propulsion system 20 and its turbine engine 32. For example, an outer stream of the air propelled by the rotating propulsor rotor 34 flows axially across the guide vane structure 36 and outside of the housing structure 56 and its exterior surface 58; e.g., along an exterior of the propulsion system nacelle 100. The guide vane structure 36 conditions (e.g., straightens out, de-swirls, etc.) the outer stream of air within the external environment 22 to enhance the forward thrust. By contrast, an inner stream of the air propelled by the rotating propulsor rotor 34 may bypass the guide vane structure 36 and enter the turbine engine 32 and its engine flowpath 74 through the flowpath inlet 76. The air entering the engine flowpath 74 through the flowpath inlet 76 may be referred to as "core air".

The core air is compressed by the LPC rotor 80 and the HPC rotor 81 and directed into a combustion chamber 102 (e.g., an annular combustion chamber) of a combustor 104 (e.g., an annular combustor) in the combustor section 68. Fuel is injected into the combustion chamber 102 by one or more fuel injectors and mixed with the compressed core air to provide a fuel-air mixture. This fuel-air mixture is ignited and combustion products thereof flow through and sequentially drive rotation of the HPT rotor 82 and the LPT rotor 83. The rotation of the HPT rotor 82 and the LPT rotor 83 respectively drive rotation of the HPC rotor 81 and the LPC rotor 80 and, thus, compression of the core air. The rotation of the LPT rotor 83 also drives the rotation of the propulsor rotor 34 through the drivetrain 94 and its geartrain 96. The turbine engine 32 and its low speed rotating structure 92 thereby power operation of (e.g., drive rotation of) the propulsor rotor 34 during aircraft propulsion system operation.

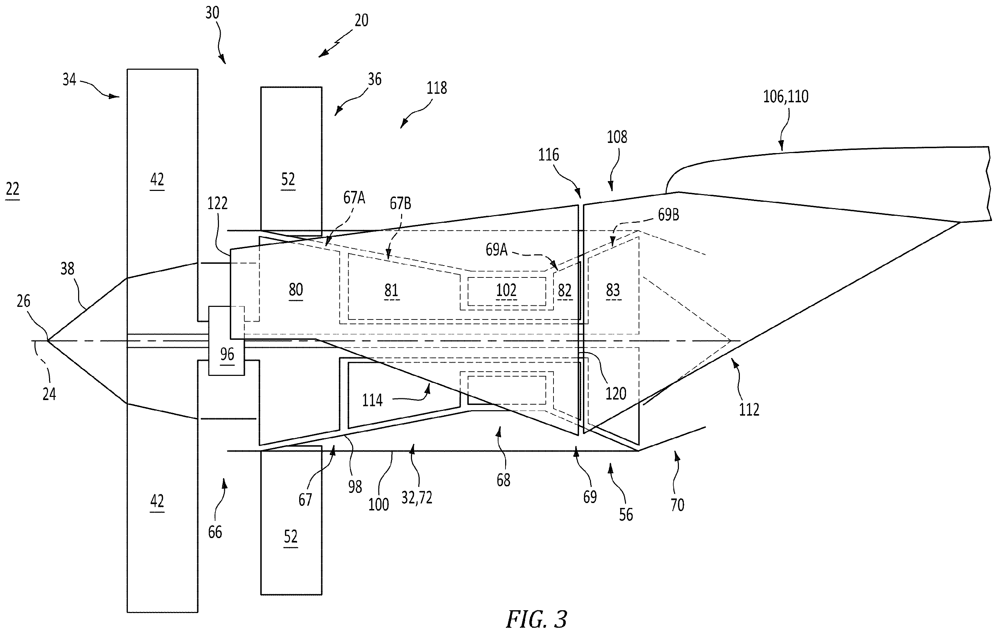

Referring to FIG. 3, the aircraft propulsion system 20 is mounted to an airframe 106 of the aircraft by a propulsion system pylon 108; e.g., a mounting structure. More particularly, the propulsion system pylon 108 mounts the aircraft propulsion system 20 and its turbine engine 32 to a component 110 of the aircraft airframe 106. This airframe component 110 may be configured as, or included as part of, a wing of the aircraft. Alternatively, the airframe component 110 may be configured as, or included as a part of, a fuselage of the aircraft or another structure of the aircraft airframe 106.

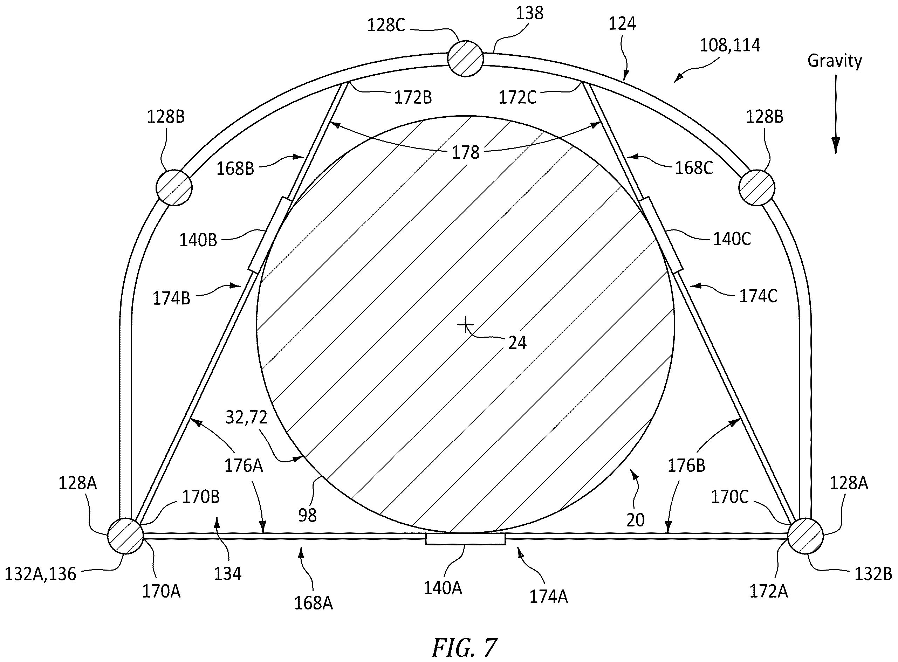

The propulsion system pylon 108 may be configured to generally conform to and/or be as close as possible to the turbine engine 32 in order to reduce aerodynamic drag; see also FIG. 7. The propulsion system pylon 108 may also be configured as a multi-section, severable modular structure. The propulsion system pylon 108 of FIG. 3, for example, includes an airframe pylon structure 112 and an engine pylon structure 114. The airframe pylon structure 112 is arranged with and is attached to the aircraft airframe 106 and its airframe component 110. This airframe pylon structure 112 projects axially along the propulsion system axis 24 away from the aircraft airframe 106 and its airframe component 110 to an intra-pylon interface 116 between the airframe pylon structure 112 and the engine pylon structure 114. The engine pylon structure 114 is arranged with and is attached to the aircraft propulsion system 20 and its turbine engine 32. This engine pylon structure 114 projects axially along the aircraft propulsion system 20 and its turbine engine 32 to the intra-pylon interface 116. With the two-piece arrangement of FIG. 3, the engine pylon structure 114 (e.g., fully and completely) structurally ties the aircraft propulsion system 20 and its turbine engine 32 to the airframe pylon structure 112, and the airframe pylon structure 112 (e.g., fully and completely) structurally ties the engine pylon structure 114 to the aircraft airframe 106 and its airframe component 110. Substantially all loads transferred between (a) the aircraft propulsion system 20 and its turbine engine 32 and (b) the aircraft airframe 106 and its airframe component 110 may thereby pass serially through the engine pylon structure 114 and the airframe pylon structure 112 and vice versa. The engine pylon structure 114 may thereby be a sole portion of the propulsion system pylon 108 structurally tying the airframe pylon structure 112 to the aircraft propulsion system 20 and its turbine engine 32. Similarly, the airframe pylon structure 112 may be a sole portion of the propulsion system pylon 108 structurally tying the engine pylon structure 114 to the aircraft airframe 106 and its airframe component 110.

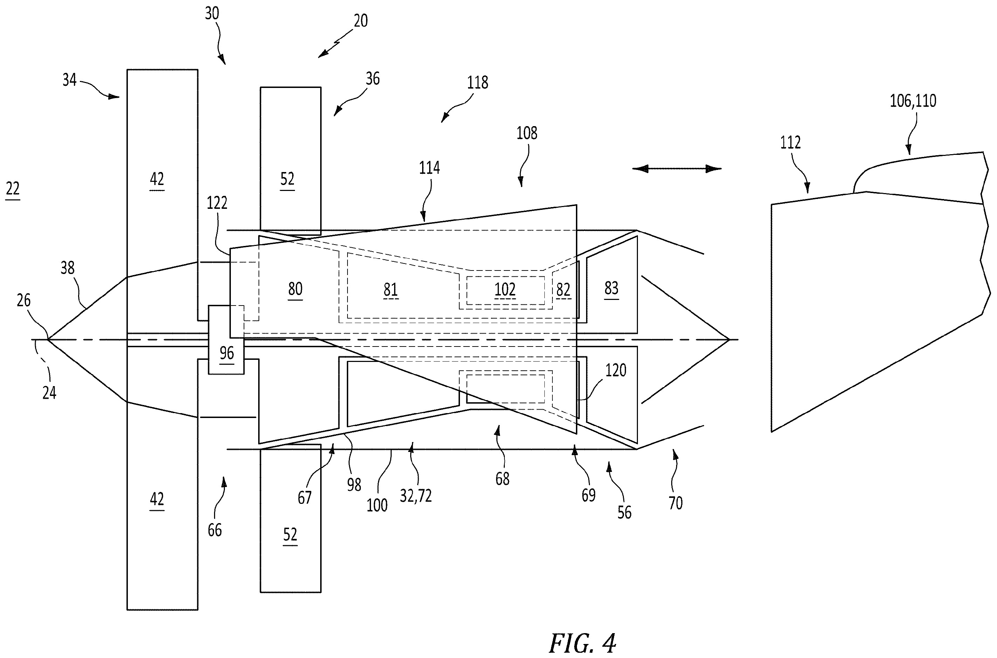

At the intra-pylon interface 116, the engine pylon structure 114 of FIG. 3 is removably attached (e.g., mechanically fastened) to the airframe pylon structure 112. More particularly, the engine pylon structure 114 of FIG. 3 may be attached to and/or removed from the airframe pylon structure 112 as a (e.g., complete) module of the propulsion system pylon 108. The engine pylon structure 114 may thereby be (e.g., completely) attached to the aircraft propulsion system 20 and its turbine engine 32 even while the engine pylon structure 114 and the airframe pylon structure 112 are decoupled from one another. Similarly, the airframe pylon structure 112 may be (e.g., completely) attached to the aircraft airframe 106 and its airframe component 110 even while the airframe pylon structure 112 and the engine pylon structure 114 are decoupled from one another. With this arrangement, at least (or only) the aircraft propulsion system 20 (or at least the turbine engine 32) and the engine pylon structure 114 may collectively form a propulsion system-pylon module 118. This propulsion system-pylon module 118, referring to FIGS. 3 and 4, may be attached to and/or removed from the airframe pylon structure 112 as a complete unit. Attachments between (a) the propulsion system pylon 108 and its engine pylon structure 114 and (b) the aircraft propulsion system 20 and its turbine engine 32 may thereby by tailored to focus primarily on aircraft propulsion system support since attachments between the pylon structures 112 and 114 at the intra-pylon interface 116 may be more readily accessible by personnel.

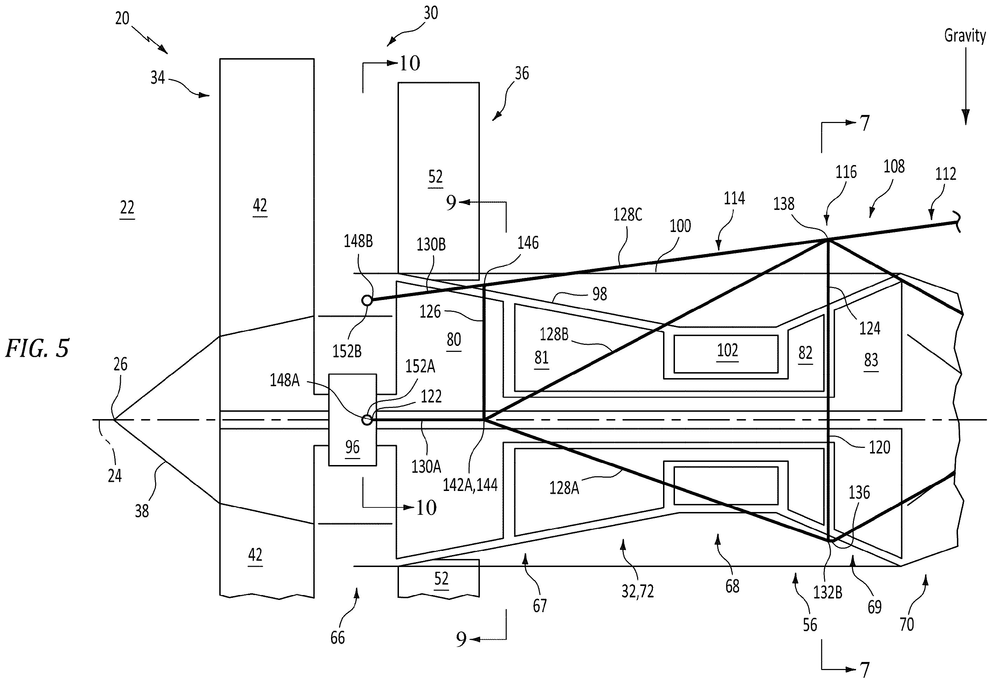

Referring to FIG. 5, the airframe pylon structure 112 and the engine pylon structure 114 may each by configured as or otherwise include a truss. The engine pylon structure 114 of FIG. 5, for example, extends axially along the turbine engine 32 and the propulsion system axis 24 from a downstream, aft end 120 of the engine pylon structure 114 to an upstream, forward end 122 of the engine pylon structure 114, which pylon structure forward end 122 may also be an upstream, forward end of the propulsion system pylon 108. This engine pylon structure 114 is also disposed radially outboard of and extends circumferentially about the turbine engine 32 and the propulsion system axis 24; e.g., see also FIGS. 7, 8, 9 and 10. The engine pylon structure 114 of FIG. 5 includes an aft frame 124, a forward frame 126, a plurality of aft truss members 128A-C (generally referred to as "128") and a plurality of forward truss members 130A and 130B (generally referred to as "130").

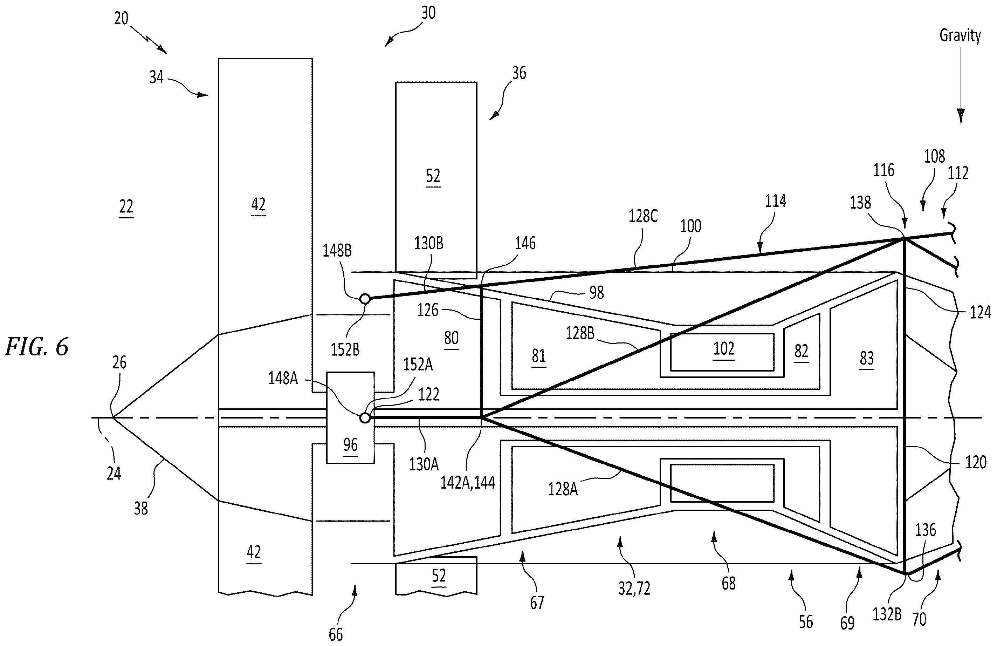

The aft frame 124 may be disposed at (e.g., on, adjacent or proximate) the pylon structure aft end 120. The aft frame 124 of FIG. 5, for example, is disposed at the intra-pylon interface 116 and is axially abutted against and removably attached to the airframe pylon structure 112. This aft frame 124 and, thus, the intra-pylon interface 116 may be axially aligned with the turbine section 69 along the turbine engine 32 and its engine core 72. The aft frame 124 and the intra-pylon interface 116 of FIG. 5, for example, are axially aligned with a mid-turbine frame (MTF) between the HPT section 69A and the LPT section 69B. However, referring to FIG. 6, it is contemplated the aft frame 124 and/or the intra-pylon interface 116 may alternatively be disposed aft of the turbine section 69. The aft frame 124 and the intra-pylon interface 116 of FIG. 6, for example, are axially aligned with a turbine exhaust case (TEC) in the exhaust section 70. The turbine section 69 of FIG. 6 is thereby disposed axially between the propulsion section members 34 and 36 and the aft frame 124 along the turbine engine 32 and the propulsion system axis 24.

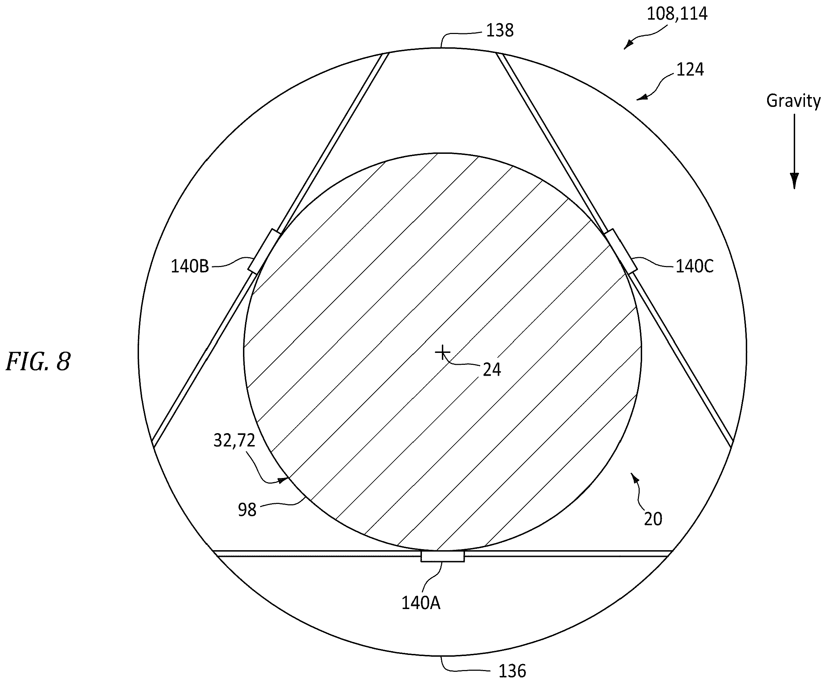

Referring to FIG. 7, the aft frame 124 extends circumferentially about the turbine engine 32 and the propulsion system axis 24. More particularly, the aft frame 124 extends partially circumferentially around the turbine engine 32 and the propulsion system axis 24 between opposing circumferential ends 132A and 132B (generally referred to as "132") of the aft frame 124. The aft frame 124 may thereby be provided with a channeled (e.g., U-shaped) geometry when viewed in a sectional reference plane perpendicular to the propulsion system axis 24; e.g., plane of FIG. 7. Here, an aft frame channel 134 is formed by the aft frame 124, and the aft frame channel 134 projects vertically into the aft frame 124 from a vertical bottom 136 of the aft frame 124 towards a vertical top 138 of the aft frame 124. Briefly, the term "vertical" may be used herein to describe a direction parallel to a force of gravity when, for example, the aircraft is on ground or flying in substantially level flight. The aft frame channel 134 is configured to receive the turbine engine 32, where the aft frame 124 of FIG. 7 is spaced radially outboard from the turbine engine 32 and its engine case 98. The present invention, however, is not limited to such an exemplary arrangement. For example, referring to FIG. 8, the aft frame 124 may alternatively be annular and extend circumferentially around the turbine engine 32 and its engine case 98.

Referring to FIG. 7, the aft frame 124 is attached to the turbine engine 32 and its engine case 98 by one or more aft engine-pylon mounts 140A-C (generally referred to as "140"). These aft engine-pylon mounts 140 are arranged (e.g., offset) circumferentially about the turbine engine 32 and the propulsion system axis 24. However, the aft engine-pylon mounts 140 may be axially aligned with one another along the turbine engine 32 and the propulsion system axis 24.

Referring to FIG. 5, the forward frame 126 is disposed axially towards the pylon structure forward end 122. The forward frame 126 of FIG. 5, for example, is axially aligned with the compressor section 67 along the turbine engine 32 and its engine core 72. More particularly, the forward frame 126 of FIG. 5 is axially aligned with the LPC section 67A along the turbine engine 32 and its engine core 72; however, the present invention is not limited to such an exemplary axial position along the turbine engine 32.

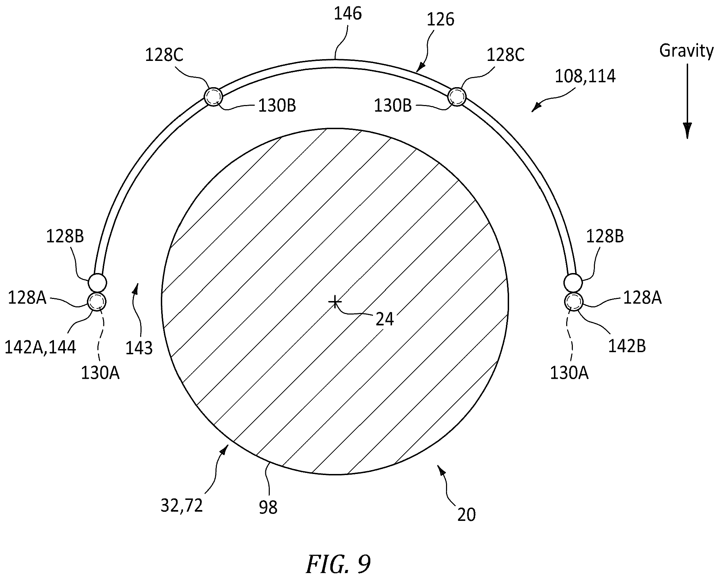

Referring to FIG. 9, the forward frame 126 extends circumferentially about the turbine engine 32 and the propulsion system axis 24. More particularly, the forward frame 126 extends partially circumferentially around the turbine engine 32 and the propulsion system axis 24 between opposing circumferential ends 142A and 142B (generally referred to as "142") of the forward frame 126. The forward frame 126 may thereby be provided with a channeled (e.g., U-shaped) geometry when viewed in the sectional reference plane. Here, a forward frame channel 143 is formed by the forward frame 126, and the forward frame channel 143 projects vertically into the forward frame 126 from a vertical bottom 144 of the forward frame 126 towards a vertical top 146 of the forward frame 126. This forward frame channel 143 is configured to receive the turbine engine 32, where the forward frame 126 of FIG. 9 is spaced radially outboard from the turbine engine 32 and its engine case 98. The turbine engine 32 may thereby be lifted vertically into the forward frame channel 143 during assembly (or the forward frame 126 may be lowered over the turbine engine 32 during assembly). The present invention, however, is not limited to such an exemplary arrangement.

Referring to FIG. 5, each aft truss member 128 may be configured as a linkage such as, but not limited to, a strut, a stanchion, a beam and/or a fixed length link. The aft truss members 128 are distributed circumferentially about the turbine engine 32 and the propulsion system axis 24 (see also FIGS. 7 and 9), for example in a triangular and/or zig-zag array. Each of these aft truss members 128 extends axially between and is connected to (e.g., formed integral with or otherwise attached to) the aft frame 124 and the forward frame 126. Referring to FIG. 7, ends of the aft truss members 128A-C may be circumferentially spaced from one another along the aft frame 124. Referring to FIG. 9, ends of the aft truss members 128B and 128C may be circumferentially spaced from one another along the forward frame 126. By contrast, the ends of each set of the aft truss members 128A and 128B may be connected to the forward frame 126 at a common (the same) node or region.

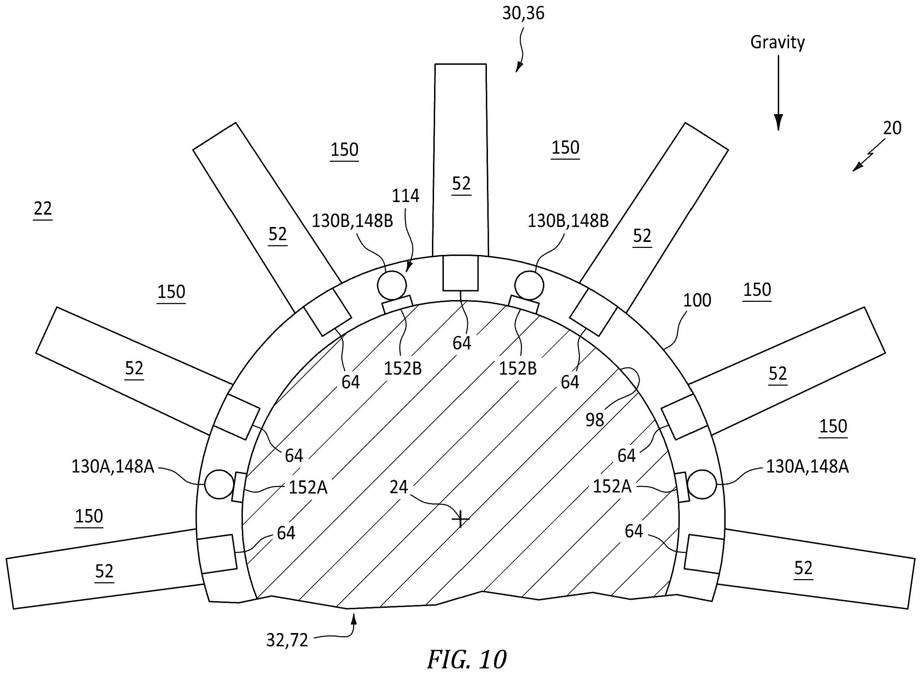

Referring to FIG. 5, each forward truss member 130 may be configured as a linkage such as, but not limited to, a strut, a stanchion, a beam and/or a fixed length link. The forward truss members 130 are distributed circumferentially about the turbine engine 32 and the propulsion system axis 24 (see also FIGS. 9 and 10), for example in an array. Each of these forward truss members 130 projects axially out from the forward frame 126 to a distal end 148A, 148B (generally referred to as "148") of the respective forward truss member 130A, 130B. Each of these distal ends 148 may be located at or near the pylon structure forward end 122. Each distal end 148 of FIG. 5 may be axially aligned with the inlet section 66, and axially between the guide vane structure 36 and the propulsor rotor 34 along the propulsion system axis 24. Moreover, referring to FIG. 10, each forward truss member 130 and its distal end 148 may be circumferentially aligned with an inter-vane gap 150 between a respective circumferentially neighboring (e.g., adjacent) pair of the guide vanes 52. Each forward truss member 130 of FIG. 5 may thereby axially overlap (e.g., extend axially along) and project axially past the guide vane structure 36 in an axial forward direction towards the propulsion system forward end 26 without interfering with operation of the guide vane structure 36 and its guide vanes 52.

Referring to FIG. 10, each forward truss member 130A, 130B is attached to the turbine engine 32 and its engine case 98 by a respective forward engine-pylon mount 152A, 152B (generally referred to as "152") at the respective distal end 148A, 148B. These forward engine-pylon mounts 152 are arranged (e.g., offset) circumferentially about the turbine engine 32 and the propulsion system axis 24. However, referring to FIG. 5, the forward engine-pylon mounts 152 may be axially aligned with one another along the turbine engine 32 and the propulsion system axis 24. The array of the forward engine-pylon mounts 152 is also axially offset from the array of the aft engine-pylon mounts 140 along the turbine engine 32 and the propulsion system axis 24.

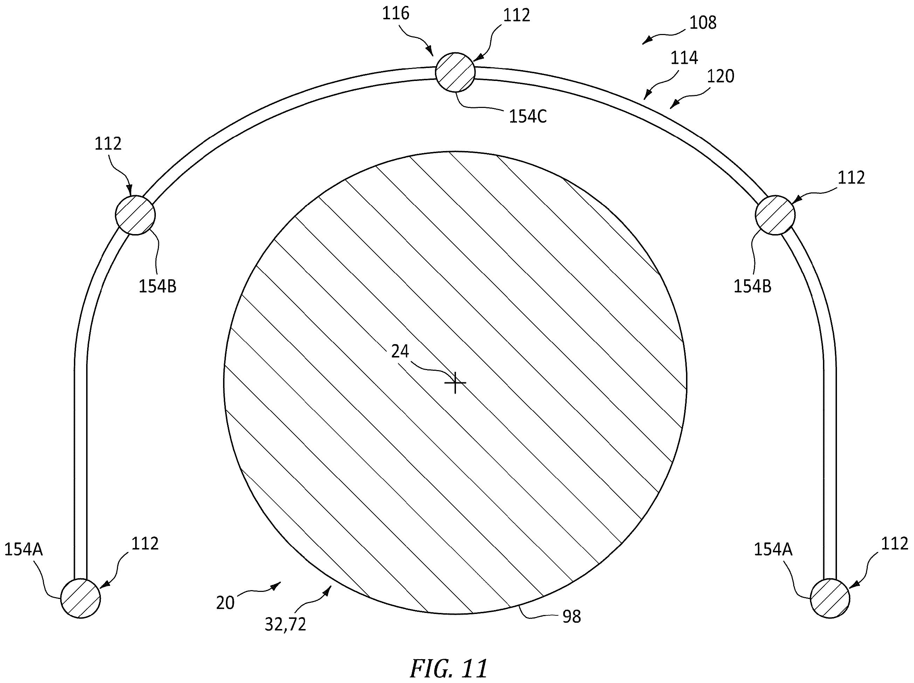

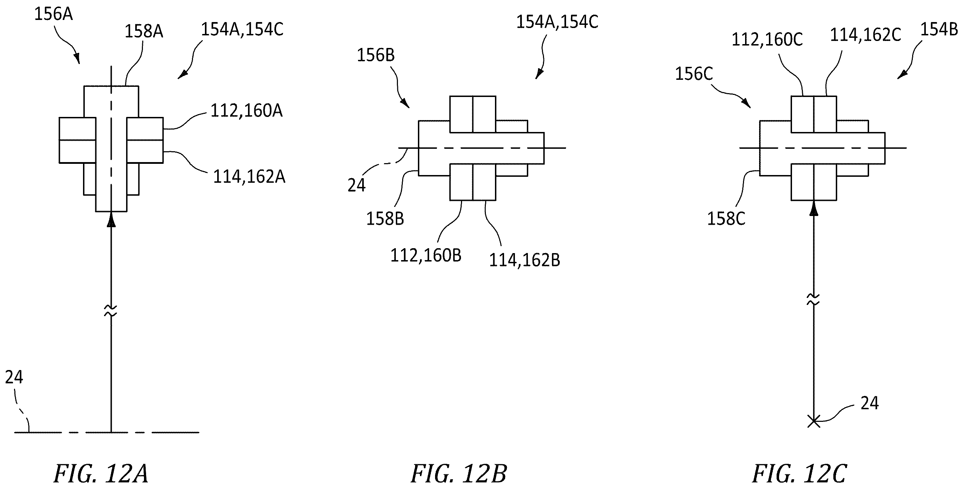

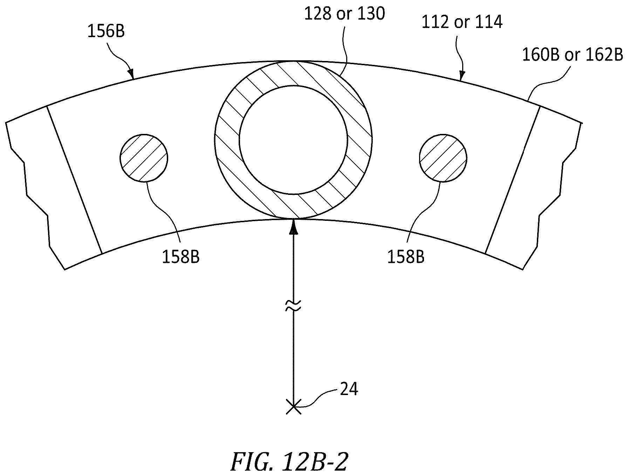

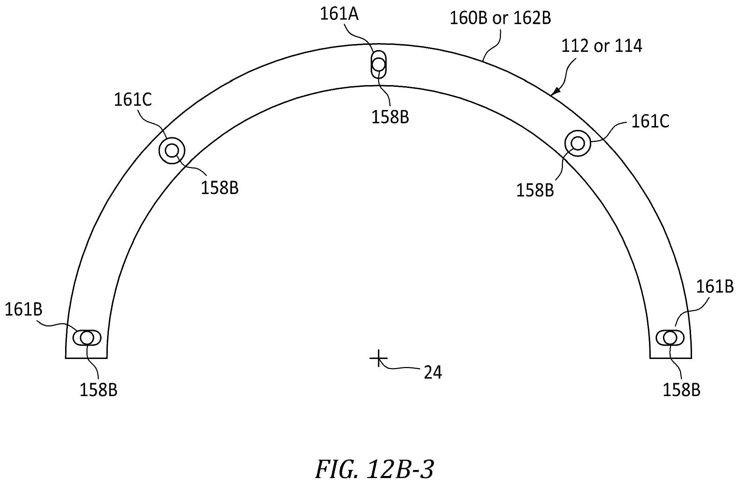

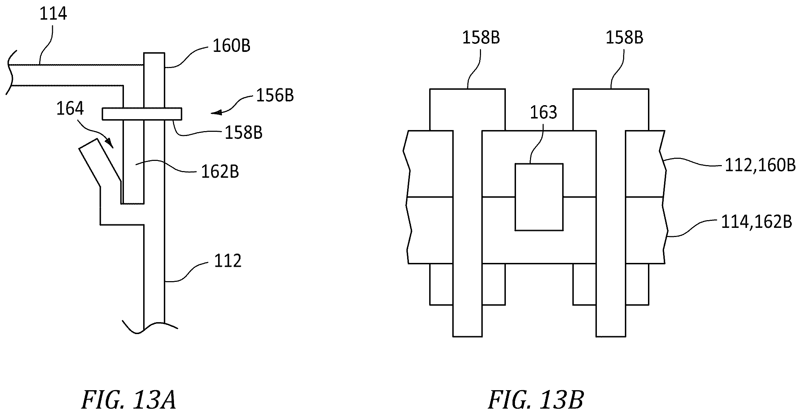

Referring to FIG. 11, the engine pylon structure 114 is removably attached to the airframe pylon structure 112 at one or more locations 154A-C (generally referred to as "154") about the turbine engine 32 and the propulsion system axis 24. These attachment locations 154A-C may be respectively circumferentially aligned with the ends of the aft truss members 128A-C (see FIG. 5) along the aft frame 124. Referring to FIG. 12A, the pylon structures 112 and 114 may be coupled together at each attachment location 154A, 154C by a respective radial coupling 156A; e.g., a coupling oriented radially relative to the propulsion system axis 24. The radial coupling 156A of FIG. 12A includes a fastener 158A that projects radially through mounting elements 160A and 162A respectively on the pylon structures 112 and 114. Referring to FIG. 12B, the pylon structures 112 and 114 may be coupled together at each attachment location 154A, 154C by at least one respective axial coupling 156B; e.g., a coupling oriented axially relative to the propulsion system axis 24. The axial coupling 156B of FIG. 12B includes a fastener 158B that projects radially through mounting elements 160B and 162B respectively on the pylon structures 112 and 114. Referring to FIG. 12B-2, a pair of the fasteners 158B may be arranged to opposing sides of a respective truss member 128 and/or 130. Referring to FIG. 12B-3, a fastener hole 161A for a respective fastener 158B through the mounting element 160B and/or through the mounting element 162B may be vertically elongated to facilitate vertical compliance while restricting lateral movement between the mounting elements 160B and 162B. Another fastener hole 161B for a respective fastener 158B through the mounting element 160B and/or through the mounting element 162B may be horizontally elongated to facilitate horizontal compliance while restricting vertical movement between the mounting elements 160B and 162B. Still another fastener hole 161C for a respective fastener 158B through the mounting element 160B and through the mounting element 162B may be circular to restrict vertical and horizontal movement between the mounting elements 160B and 162B. Referring to FIG. 12C, the pylon structures 112 and 114 may be coupled together at each attachment location 154B by a respective lateral coupling 156C; e.g., a coupling oriented laterally (e.g., circumferentially and/or tangentially) relative to the propulsion system axis 24. The lateral coupling 156C of FIG. 12C includes a fastener 158C that projects laterally through mounting elements 160C and 162C respectively on the pylon structures 112 and 114, where the lateral direction may be a direction tangent the pylon structures 112 and 114 at the respective attachment location 156C. Examples of the fasteners 158A-C (generally referred to as "158") of FIGS. 12A-C include, but are not limited to, bolts and pins. Examples of the mounting elements 160A-C (generally referred to as "160"), 162A-C (generally referred to as "162") of FIGS. 12A-C include, but are not limited to, brackets, flanges, tabs and/or frame members. The present invention, however, is not limited to such exemplary couplings. For example, referring to FIG. 13A, the mounting element 162 of the engine pylon structure 114 may be seated in a channel 164 in the mounting element 160 of the airframe pylon structure 112. With this arrangement, the mounting elements 160 and 162 may transfer loads between the pylon structures 112 and 114, whereas the fastener 158 may prevent relative motion between the mounting elements 160 and 162; e.g., locks the mounting elements together. In another example, referring to FIG. 13B, a pin 163 may be captured between the mounting elements 160 and 162 to transfer shear loads between those mounting elements 160 and 162.

Referring to FIGS. 5, 7 and 10, the engine-pylon mounts 140 and 152 may have various configurations. One or more of the engine-pylon mounts (e.g., 152B of FIGS. 5 and 10), for example, may be configured to transfer at least or substantially only radial loads (e.g., vertical loads) between the turbine engine 32 and the engine pylon structure 114. These engine-pylon mounts (e.g., 152B of FIGS. 5 and 10) may also transfer lateral loads. One or more of the engine-pylon mounts (e.g., 152A of FIGS. 5 and 10) may also or alternatively be configured to transfer at least or substantially only axial loads (e.g., thrust loads) between the turbine engine 32 and the engine pylon structure 114. One or more of the engine-pylon mounts (e.g., 140 of FIG. 7) may still also or alternatively be configured to transfer at least or substantially only torsional loads between the turbine engine 32 and the engine pylon structure 114. Various types and configurations of mounts for transferring radial loads, axial loads and/or torsional loads are known in the art, and the present invention is not limited to any particular one thereof.

In some embodiments, referring to FIG. 7, the engine pylon structure 114 may also include one or more mounting truss members 168A-C (generally referred to as "168"). Each of these mounting truss members 168 may be configured as a linkage such as, but not limited to, a strut, a stanchion, a beam and/or a fixed length link. The mounting truss members 168 are configured to couple the aft frame 124 to the turbine engine 32 and its engine case 98. However, it is contemplated these mounting truss members 168 may alternatively be utilized elsewhere along the engine pylon structure 114 for coupling to the turbine engine 32 and its engine case 98. The mounting truss members 168 of FIG. 7 are arranged circumferentially about the turbine engine 32 and its engine case 98 in a triangular pattern when viewed in the sectional reference plane. More particularly, each mounting truss member 168A-C of FIG. 7 extends longitudinally along a (e.g., straight line) longitudinal centerline of the respective mounting truss member 168A-C from a first end 170A-C (generally referred to as "170") of the respective mounting truss member 168A-C to a second end 172A-C (generally referred to as "172") of the respective mounting truss member 168A-C.

The bottom mounting truss member 168A of FIG. 7 is disposed vertically below the turbine engine 32 and its engine case 98 and extends laterally across an opening into the aft frame channel 134. The first end 170A of this bottom mounting truss member 168A is connected (e.g., removably attached) to the aft frame 124 at a first side bottom node, which first side bottom node is disposed at the first circumferential end 132A of the aft frame 124. The second end 172A of the bottom mounting truss member 168A is connected (e.g., removably attached) to the aft frame 124 at a second side bottom node, which second side bottom node is disposed at the second circumferential end 132B of the aft frame 124. An intermediate section 174A of the bottom mounting truss member 168A (longitudinally between the ends 170A and 172A) is disposed radially outboard of and next to the turbine engine 32 and its engine case 98. Along this intermediate section 174A, the bottom mounting truss member 168A may be attached to the turbine engine 32 and its engine case 98 through the bottom aft engine-pylon mount 140A. Here, the bottom aft engine-pylon mount 140A is located at a vertical bottom of the turbine engine 32. This may be substantially the same as the arrangements to the sides for mounts 140B and 140C.

The first side mounting truss member 168B of FIG. 7 is disposed to a first side of the turbine engine 32 and its engine case 98, radially between the aft frame 124 and the turbine engine 32 and its engine case 98. The first end 170B of this first side mounting truss member 168B is connected to the aft frame 124 at the first side bottom node. The second end 172B of the first side mounting truss member 168B is connected to the aft frame 124 at a first side top node, which first side top node is disposed vertically above the first side bottom node to the first side of the turbine engine 32 and its engine case 98. An intermediate section 174B of the first side mounting truss member 168B (longitudinally between the ends 170B and 172B) is disposed radially outboard of and next to the turbine engine 32 and its engine case 98. Along this intermediate section 174B, the first side mounting truss member 168B may be attached to the turbine engine 32 and its engine case 98 through the first side aft engine-pylon mount 140B. Here, the first side aft engine-pylon mount 140B is located vertically between the propulsion system axis 24 and a vertical top of the turbine engine 32.

The second side mounting truss member 168C of FIG. 7 is disposed to a second side of the turbine engine 32 and its engine case 98, radially between the aft frame 124 and the turbine engine 32 and its engine case 98. The first end 170C of this second side mounting truss member 168C is connected to the aft frame 124 at the second side bottom node. The second end 172C of the second side mounting truss member 168C is connected to the aft frame 124 at a second side top node, which second side top node is disposed vertically above the second side bottom node to the second side of the turbine engine 32 and its engine case 98. This second side top node is also spaced laterally from the first side top node such that, for example, the propulsion system axis 24 is centered between the first side top node and the second side top node and, thus, the ends 172B and 172C. An intermediate section 174C of the second side mounting truss member 168C (longitudinally between the ends 170C and 172C) is disposed radially outboard of and next to the turbine engine 32 and its engine case 98. Along this intermediate section 174C, the second side mounting truss member 168C may be attached to the turbine engine 32 and its engine case 98 through the second side aft engine-pylon mount 140C. Here, the second side aft engine-pylon mount 140C is located vertically between the propulsion system axis 24 and the vertical top of the turbine engine 32.

The mounting truss members 168 of FIG. 7 may be arranged in and/or along a common reference plane that is within at least ten degrees (10°), five degrees (5°) or completely perpendicular to the propulsion system axis 24. An example of this common reference plane is the sectional reference plane of FIG. 7. Within the common reference plane, the bottom mounting truss member 168A is angularly offset from each side mounting truss member 168B, 168C by an included offset angle 176A, 176B (generally referred to as "176"). This offset angle 176 is a non-zero acute angle greater than thirty degrees (>30°) and less than ninety degrees (<90°). The offset angle 176, for example, may be between forty degrees (40°) and eighty degrees (80°) inclusive; e.g., about sixty degrees (60°). Similarly, within the common reference plane, the side mounting truss members 168B and 168C are angularly offset from one another by an included offset angle 178. This offset angle 178 is a non-zero acute angle greater than thirty degrees (>30°) and less than ninety degrees (<90°). The offset angle 178, for example, may be between forty degrees (40°) and eighty degrees (80°) inclusive; e.g., about sixty degrees (60°). This offset angle 178 may be equal to the offset angle 176A, 176B. With this arrangement, each of the mounting truss members 168 may be arranged substantially or completely tangent to the turbine engine 32 and its engine case 98 along the respective intermediate section 174A-C (generally referred to as "174"). The mounting truss members 168 may thereby transfer substantially or only torsional loads between the turbine engine 32 and the engine pylon structure 114. By contrast, punch loads such as axial thrust loads may be transferred between the turbine engine 32 and the engine pylon structure 114 at the forward engine-pylon mounts 152 of FIG. 5. The forward engine-pylon mounts 152 of FIG. 5 also transfer the radial / vertical loads between the turbine engine 32 and the engine pylon structure 114.

In some embodiments, referring still to FIG. 7, the bottom mounting truss member 168A may be removed from the aft frame 124 to facilitate inserting the turbine engine 32 into the aft frame channel 134 (or removal of the turbine engine 32 from the aft frame channel 134). The bottom mounting truss member 168A may then be attached to the aft frame 124 to close the aft frame channel 134. Alternatively, it is contemplated the turbine engine 32 may be inserted axially into the aft frame channel 134 without (or with) removable of the bottom mounting truss member 168A from the aft frame 124.

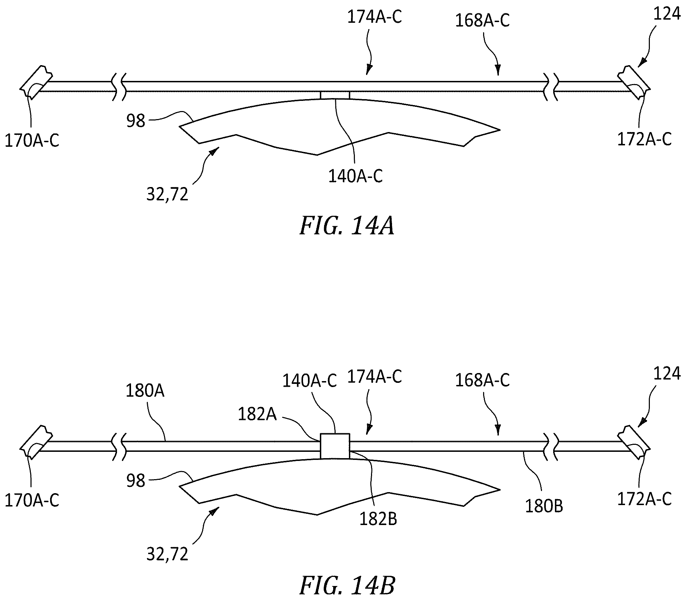

In some embodiments, referring to FIG. 14A, any one, some or all of the mounting truss members 168 may each be configured as a unitary body such as a beam. With this arrangement, the respective aft engine-pylon mount 140 attaches the engine case 98 to a side of the respective mounting truss member 168. In other embodiments, referring to FIG. 14B, any one, some or all of the mounting truss members 168 may each include multiple links 180A and 180B (generally referred to as "180"). The first link 180A extends longitudinally from the first end 170 of the respective mounting truss member 168 to a distal end 182A of the first link 180 within the respective intermediate section 174, where that first link 180A is attached to the turbine engine 32 and its engine case 98 through the respective engine-pylon mount 140. Similarly, the second link 180B extends longitudinally from the second end 172 of the respective mounting truss member 168 to a distal end 182B of the second link 180B within the respective intermediate section 174, where that second link 180B is attached to the turbine engine 32 and its engine case 98 through the respective engine-pylon mount 140. Here, the respective aft engine-pylon mount 140 may be adjustable to accommodate manufacturing tolerances.

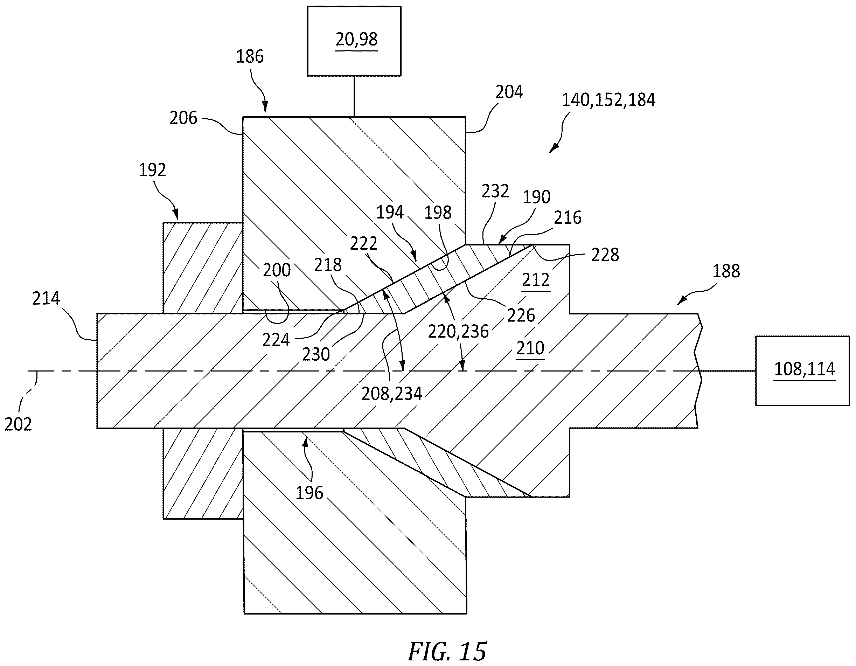

FIG. 15 illustrates an exemplary one of the engine-pylon mounts 140, 152. This engine-pylon mount 184 of FIG. 15 includes a mount bracket 186, a mount stud 188, a mount bushing 190 and a mount retainer 192 (e.g., a retainer nut). For ease of description, (a) the mount bracket 186 is described below as being configured as an integral part of, attached to or otherwise arranged with the engine case 98, and (b) the mount stud 188 is described below as being configured as an integral part of, attached to or otherwise arranged with the engine pylon structure 114. However, it is contemplated the mount stud 188 may alternatively be arranged with the engine case 98, and the mount bracket 186 may alternatively be arranged with the engine pylon structure 114 in other embodiments. Moreover, it is contemplated the mount 184 of FIG. 15 may be utilized for attaching various other components of the aircraft together. For example, the mount 184 of FIG. 15 may attach the pylon structures 112 and 114 of FIG. 5 together. In another example, the mount 184 of FIG. 15 may attach the airframe pylon structure 112 of FIG. 3 to the airframe component 110.

The mount bracket 186 of FIG. 15 may be configured as or otherwise include a mounting flange with a bracket receptacle 194. The bracket receptacle 194 of FIG. 15 includes a receptacle aperture 196, a first receptacle surface 198 (e.g., a frustoconical surface) and a second receptacle surface 200 (e.g., a cylindrical surface).

The receptacle aperture 196 extends axially along an axis 202 of the engine-pylon mount 184 through the mount bracket 186 from a first side 204 of the mount bracket 186 to a (e.g., parallel) second side 206 of the mount bracket 186. A first axial section of the receptacle aperture 196 at the bracket first side 204 is tapered. A radius of the receptacle aperture 196 from the mount axis 202 to the first receptacle surface 198, for example, decreases as the first axial section of the receptacle aperture 196 projects axially along the mount axis 202 into the mount bracket 186 from the bracket first side 204 to a second axial section of the receptacle aperture 196. The second axial section of the receptacle aperture 196 may be cylindrical. The radius of the receptacle aperture 196 from the mount axis 202 to the second receptacle surface 200, for example, may be uniform (e.g., constant) as the second axial section of the receptacle aperture 196 projects axially along the mount axis 202 into the mount bracket 186 from the bracket second side 206 to the first axial section of the receptacle aperture 196.

The first receptacle surface 198 is disposed at the bracket first side 204. This first receptacle surface 198 forms a radial outer periphery of the first axial section of the receptacle aperture 196. The first receptacle surface 198 extends axially along and circumscribes the first axial section of the receptacle aperture 196. The first receptacle surface 198 of FIG. 15 is configured as or otherwise includes a concave frustoconical receptacle surface. The first receptacle surface 198 of FIG. 15, for example, has a (e.g., full) circular cross-sectional geometry when viewed in a first mount reference plane perpendicular to the mount axis 202. This first receptacle surface 198 also tapers radially inward towards the mount axis 202. The first receptacle surface 198 of FIG. 15, for example, is angularly offset from the mount axis 202 by an included offset angle 208 when viewed in a second mount reference plane parallel to (e.g., including) the mount axis 202. This offset angle is a non-zero acute angle, for example greater than twenty degrees (20°) and/or less than eighty degrees (80°); e.g., between thirty degrees (30°) and seventy degrees (70°).

The second receptacle surface 200 is disposed at the bracket second side 206. This second receptacle surface 200 forms a radial outer periphery of the second axial section of the receptacle aperture 196. The second receptacle surface 200 extends axially along and circumscribes the second axial section of the receptacle aperture 196. The second receptacle surface 200 of FIG. 15 is configured as or otherwise includes a cylindrical receptacle surface.

The mount stud 188 of FIG. 15 includes a stud shaft 210 and a stud shoulder 212. The stud shaft 210 projects axially along the mount axis 202 to a distal end 214 of the mount stud 188 and its stud shaft 210. The stud shoulder 212 is connected to (e.g., formed integral with or otherwise attached to) the mount stud 188. The stud shoulder 212 is axially offset from the stud distal end 214 by an axial distance. The stud shoulder 212 of FIG. 15 is annular and extends circumferentially around the stud shaft 210. The stud shoulder 212 projects radially out from the stud shaft 210 to an outer side surface 216 of the stud shoulder 212. This shoulder side surface 216 of FIG. 15 is configured as or otherwise includes a convex frustoconical shoulder surface. The shoulder side surface 216 of FIG. 15, for example, has a (e.g., full) circular cross-sectional geometry when viewed in the first mount reference plane. This shoulder side surface 216 also tapers radially inward towards the mount axis 202 and to an outer side surface 218 of the stud shaft 210. The shoulder side surface 216 of FIG. 15, for example, is angularly offset from the mount axis 202 by an included offset angle 220 when viewed in the second mount reference plane. This offset angle 220 is a non-zero acute angle, for example greater than twenty degrees (20°) and/or less than eighty degrees (80°); e.g., between thirty degrees (30°) and seventy degrees (70°). The offset angle 220 may be equal to the offset angle 208.

The mount bushing 190 may be configured as a canted annular puck. The mount bushing 190 of FIG. 15, for example, extends axially along the mount axis 202 from a (e.g., tapered) first bushing surface 222 at a first end 224 of the mount bushing 190 to a (e.g., tapered) second bushing surface 226 at a second end 228 of the mount bushing 190. The mount bushing 190 extends radially from an (e.g., cylindrical) inner bushing surface 230 to an (e.g., cylindrical) outer bushing surface 232. The mount bushing 190 extends circumferentially about (e.g., completely around) the mount axis 202. The inner bushing surface 230 may thereby form an outer peripheral boundary of a center bore axially through the mount bushing 190.

The first bushing surface 222 is arranged to axially face the mount bracket 186 and its first receptacle surface 198. The first bushing surface 222 of FIG. 15 is configured as or otherwise includes a convex frustoconical bushing surface. The first bushing surface 222 of FIG. 15, for example, has a (e.g., full) circular cross-sectional geometry when viewed in the first mount reference plane. This first bushing surface 222 also tapers radially inward towards the mount axis 202 as this first bushing surface 222 extends axially to the bushing first end 224. The first bushing surface 222 of FIG. 15, for example, is angularly offset from the mount axis 202 by an included offset angle 234 when viewed in the second mount reference plane. This offset angle 234 is a non-zero acute angle, for example greater than twenty degrees (20°) and/or less than eighty degrees (80°); e.g., between thirty degrees (30°) and seventy degrees (70°). The offset angle 234 may be equal to the offset angle 208 prior to and/or after assembly of the engine-pylon mount 184 of FIG. 15.

The second bushing surface 226 is arranged to axially face the stud shoulder 212 and its shoulder side surface 216. The second bushing surface 226 of FIG. 15 is configured as or otherwise includes a concave frustoconical bushing surface. The second bushing surface 226 of FIG. 15, for example, has a (e.g., full) circular cross-sectional geometry when viewed in the first mount reference plane. This second bushing surface 226 also tapers radially inward towards the mount axis 202 as this second bushing surface 226 extends axially from the bushing second end 228 towards the bushing first end 224. The second bushing surface 226 of FIG. 15, for example, is angularly offset from the mount axis 202 by an included offset angle 236 when viewed in the second mount reference plane. This offset angle 236 is a non-zero acute angle, for example greater than twenty degrees (20°) and/or less than eighty degrees (80°); e.g., between thirty degrees (30°) and seventy degrees (70°). The offset angle 236 may be equal to the offset angle 220 prior to and/or after assembly of the engine-pylon mount 184 of FIG. 15. The offset angle 236 may also (or alternatively) be equal to the offset angle 234 prior to and/or after assembly of the engine-pylon mount 184 of FIG. 15.

The mount bushing 190 may be constructed from or otherwise include a compliant bushing material. This bushing material may be a polymer such as, but not limited to, rubber. By contrast, the mount bracket 186 and the mount stud 188 may be constructed from or otherwise include a stiff material such as metal. The mount bushing 190 may thereby be compliant relative to the mount bracket 186 and the mount stud 188 to facilitate assembly as described below. In addition, the mount bushing 190 may provide a buffer between the mount bracket 186 and the mount stud 188.

During assembly of the engine-pylon mount 184 of FIG. 15, the mount bushing 190 may be mounted onto the mount stud 188. An end portion of the mount stud 188, for example, may be inserted into the center bore of the mount bushing 190 such that the mount stud 188 projects axially through the mount bushing 190 and the mount bushing 190 is abutted against the stud shoulder 212. The end portion of the mount stud 188 may then be inserted into the receptacle aperture 196 such that the mount stud 188 projects axially through the bracket receptacle 194 and the mount bushing 190 is abutted against the mount bracket 186. The mount retainer 192 may then be attached to (e.g., threaded onto) the stud shaft 210 at the stud distal end 214. The mount bracket 186 and the mount bushing 190 may thereby be axially captured between the stud shoulder 212 and the mount retainer 192. In some embodiments, the mount bracket 186 and the mount bushing 190 may also be axially clamped between the stud shoulder 212 and the mount retainer 192. In the assembled arrangement of FIG. 15, the mount bushing 190 is disposed axially between the first receptacle surface 198 and the shoulder side surface 216. The first bushing surface 222 engages (e.g., contacts, presses against, etc.) the first receptacle surface 198 at a first ramped interface. The second bushing surface 226 engages (e.g., contacts, presses against, etc.) the shoulder side surface 216 at a second ramped interface. These ramped interfaces are operable to facilitate alignment (e.g., centering) of the mount stud 188 with the bracket receptacle 194. The compliance of the mount bushing 190 may facilitate (e.g., slight) co-axial misalignment between the mount stud 188 and the bracket receptacle 194. The mount bushing 190 may thereby accommodate (e.g., slight) manufacturing tolerance variation between the mount bracket 186 and the mount stud 188. In addition, the mount bushing 190 may reduce transmission of vibrations between the mount bracket 186 and the mount stud 188. In some embodiments, a radial separation / clearance between the second receptacle surface 200 and the stud shaft 210 may be (e.g., substantially) larger than shown in FIG. 15.

The engine flowpath 74 of FIG. 1 extends longitudinally from the flowpath inlet 76, sequentially through the inlet section 66, the LPC section 67A, the HPC section 67B, the combustor section 68, the HPT section 69A, the LPT section 69B and the exhaust section 70, to the flowpath exhaust 78. The engine flowpath 74 of FIG. 1 is configured such that the core air and the combustion products generally flow in the aft, downstream direction towards the propulsion system aft end 28. The core air and the combustion products thereby flow along with the ambient air propelled by the rotating propulsor rotor 34 in a common axial direction - the downstream, aft direction. The turbine engine 32 of the present invention, however, is not limited to such an exemplary common flow engine arrangement. For example, the engine flowpath 74 may alternatively be configured such that the core air and the combustion products generally flow in a forward, upstream direction towards the propulsion system forward end 26. The core air and the combustion products may thereby flow in an opposite direction as the ambient air propelled by the rotating propulsor rotor 34. Here, the turbine engine 32 may have a reverse flow engine arrangement. It is also contemplated the turbine engine 32 may be offset from the propulsor rotor 34 in other embodiments.

The turbine engine 32 of FIG. 1 is described above with a particular two rotating structure arrangement. The present invention, however, is not limited to such an exemplary turbine engine arrangement. For example, the LPC rotor 80 may be omitted to configure the LPT rotor 83 as a power turbine (PT) rotor for the propulsor rotor 34. In another example, the turbine engine 32 may also include another rotating structure; e.g., an intermediate speed spool for the engine core 72.

In some embodiments, referring to FIG. 1, the tip 60 of each guide vane 52 may be disposed radially inboard of the tip 46 of each propulsor blade 42. In other embodiments, the tip 60 of each guide vane 52 may be radially aligned with the tip 46 of each propulsor blade 42. In still other embodiments, the tip 60 of each guide vane 52 may be radially outboard of the tip 46 of each propulsor blade 42.

The guide vane structure 36 is described above as a fixed (e.g., non-rotatable) guide vane structure. It is contemplated, however, the guide vane structure 36 may alternatively be selectively rotatable about the propulsion system axis 24. With such an arrangement, the aircraft propulsion system 20 may be configured as an open rotor propulsion system with a swirl recovery blade (SRB) open rotor architecture. More particularly, the aircraft propulsion system 20 may operate as: (A) a counter-rotating open rotor (CROR) propulsion system during a dual rotor mode of operation (e.g., when both the propulsor rotor 34 and the structure 36 are counter-rotating about the propulsion system axis 24); and (B) a single open rotor and swirl recovery vane (SRV) propulsion system during a single rotor mode of operation (e.g., when the propulsor rotor 34 is rotating and the structure 36 is rotationally fixed about the propulsion system axis 24). Note, when the guide vane structure 36 is configured to selectively rotate about the propulsion system axis 24, the moving guide vanes 52 operate as propulsor blades.

The aircraft propulsion system 20 of FIG. 1 and its propulsion section 30 are described as including the guide vane structure 36 with an SRV or SRB configuration. The present invention, however, is not limited to such an exemplary propulsion system configuration. For example, the aircraft propulsion system 20 may alternatively be configured without an open guide vane structure. The aircraft propulsion system 20 may thereby be configured as a single rotor (SR) open rotor propulsion system. In another example, the aircraft propulsion system 20 may be configured with a set of the open propulsor rotors (e.g., counter-rotating propulsor rotors) operatively coupled to the turbine engine 32 (see FIG. 1) through the geartrain 96. The aircraft propulsion system 20 may thereby be configured as a counter-rotating open rotor (CROR) propulsion system. Moreover, while the aircraft propulsion system 20 is described above as an open rotor propulsion system, it is contemplated various aspects described above may alternatively be utilized with a ducted rotor propulsion system. The aircraft propulsion system 20, for example, may be configured as a turbofan propulsion system where the propulsor rotor 34 and the guide vane structure 36 are disposed within an outer case (e.g., a fan case).

While various embodiments of the present invention have been described, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except in light of the attached claims and their equivalents.

## Claims

1. An assembly for an aircraft, the assembly comprising:
an aircraft propulsion system (20) including a turbine engine (32) and an open propulsor rotor (34), the turbine engine (32) configured to drive rotation of the open propulsor rotor (34); and
a propulsion system pylon (108) configured to mount the aircraft propulsion system (20) to an airframe (106) of the aircraft, the propulsion system pylon (108) including an engine pylon structure (114) and an airframe pylon structure (112);
the engine pylon structure (114) configured to connect the aircraft propulsion system (20) to the airframe pylon structure (112), and the engine pylon structure (114) attached to the turbine engine (32) by a plurality of engine-pylon mounts (140, 152); and
the airframe pylon structure (112) configured to connect the engine pylon structure (114) to the airframe (106) of the aircraft, and the airframe pylon structure (112) removably attached to the engine pylon structure (114).

2. The assembly of claim 1, wherein:
the plurality of engine-pylon mounts (140, 152) include a first engine-pylon mount (140A; 152A) and a second engine-pylon mount (140B; 152B); and
the first engine-pylon mount (140A; 152A) and the second engine-pylon mount (140B; 152B) are axially aligned along and circumferentially offset about an axis (24) of the turbine engine (32).

3. The assembly of claim 1, wherein:
the plurality of engine-pylon mounts (140, 152) include a first engine-pylon mount (140) and a second engine-pylon mount (152); and
the first engine-pylon mount (140) and the second engine-pylon mount (152) are axially offset along an axis (24) of the turbine engine (32).

4. The assembly of any preceding claim, wherein:
the plurality of engine-pylon mounts (140, 152) comprise an engine-pylon mount (152B) configured to transfer a radial load between the turbine engine (32) and the engine pylon structure (114); and/or
the plurality of engine-pylon mounts (140, 152) comprise an engine-pylon mount (152A) configured to transfer an axial load between the turbine engine (32) and the engine pylon structure (114).

5. The assembly of any preceding claim, wherein the plurality of engine-pylon mounts (140, 152) comprise an engine-pylon mount (140) configured to transfer a torsional load between the turbine engine (32) and the engine pylon structure (114).

6. The assembly of any preceding claim, wherein:
the turbine engine (32) comprises a compressor section (67); and
the plurality of engine-pylon mounts (140, 152) comprise an engine-pylon mount (152) located axially between the compressor section (67) and the open propulsor rotor (34) along an axis (24) of the turbine engine (32).

7. The assembly of any preceding claim, wherein the turbine engine (32) comprises a turbine section (69), and wherein either:
the plurality of engine-pylon mounts (140, 152) comprise an engine-pylon mount (140) disposed axially along the turbine section (69); or
the turbine section (69) is located axially between the open propulsor rotor (34) and an engine-pylon mount (140) of the plurality of engine-pylon mounts (140, 152) along an axis (24) of the turbine engine (32).

8. The assembly of any preceding claim, wherein:
the aircraft propulsion system (20) further comprises an open guide vane structure (36) next to the open propulsor rotor (34); and
the engine pylon structure (114) axially overlaps the open guide vane structure (36) along an axis (24) of the turbine engine (32).

9. The assembly of any preceding claim, wherein:
the aircraft propulsion system (20) further comprises an open guide vane structure (36) next to the open propulsor rotor (34); and
the plurality of engine-pylon mounts (140, 152) comprise an engine-pylon mount (152) located axially between the open propulsor rotor (34) and the open guide vane structure (36) along an axis (24) of the turbine engine (32).

10. The assembly of claim 9, wherein:
the open guide vane structure (36) comprises a first open guide vane (52) and a second open guide vane (52) circumferentially neighboring the first open guide vane (52); and
the engine-pylon mount (152) located axially between the open propulsor rotor (34) and the open guide vane structure (36) is circumferentially aligned with an inter-vane gap (150), circumferentially between the first open guide vane (52) and the second open guide vane (52), about the axis (24) of the turbine engine (32).

11. The assembly of any preceding claim, wherein:
the engine pylon structure (114) comprises a linkage (130, 168); and
the plurality of engine-pylon mounts (140, 152) comprise an engine-pylon mount (140; 152) disposed at an end of the linkage (130; 168) where the engine-pylon mount (140; 152) mounts the linkage (130; 168) to the turbine engine (32).

12. The assembly of any preceding claim, wherein:
the engine pylon structure (114) comprises a frame that extends circumferentially about the turbine engine (32); and
the plurality of engine-pylon mounts (140, 152) comprise an engine-pylon mount (140, 152) that mounts (140B) the frame to the turbine engine (32).

13. The assembly of any preceding claim, wherein:
the engine pylon structure (114) comprises a truss; and/or
the airframe pylon structure (112) comprises a truss.

14. The assembly of any preceding claim, wherein the turbine engine (32) comprises a turbine section (69), and wherein either:
an interface (116) between the engine pylon structure (114) and the airframe pylon structure (112) is located axially along the turbine section (69); or
the turbine engine (69) is located axially between he open propulsor rotor (34) and an interface (116) between the engine pylon structure (114) and the airframe pylon structure (112).

15. The assembly of any preceding claim, wherein an interface (116) between the engine pylon structure (114) and the airframe pylon structure (112) comprises at least one of:
an axial fastener (158B) attaching the engine pylon structure (114) and the airframe pylon structure (112), the axial fastener (158B) extending axially along an axis (24) of the turbine engine (32);
a radial fastener (158A) attaching the engine pylon structure (114) and the airframe pylon structure (112), the radial fastener (158A) extending radially relative to the axis (24) of the turbine engine (32); or
a lateral fastener (158C) attaching the engine pylon structure (114) and the airframe pylon structure (112), the lateral fastener (158C) extending laterally relative to the axis (24) of the turbine engine (32).
